# EUROPÄISCHE PATENTANMELDUNG

(11) **EP 3 510 899 A1**
(43) Veröffentlichungstag der Anmeldung: **17.07.2019**
(21) Anmeldenummer: 19150738.3
(22) Anmeldetag: 08.01.2019
(51) Int. Cl.: A47J 27/04, A47J 27/16

(54) **VORRICHTUNG, SYSTEM SOWIE VERFAHREN ZUM ERWÄRMEN EINES IN EINEM GEFÄSS AUFGENOMMENEN LEBENSMITTELS, INSBESONDERE EINES FERTIGGERICHTES**

(30) Priorität: 12.01.2018 DE 102018100597
(71) Anmelder: Carogusto AG, 8580 Amriswil (CH)
(72) Erfinder: Zwahlen, Christof, 8590 Romanshorn (CH); Grendelmeier, Thomas, 8634 Hombrechtikon (CH)
(74) Vertreter: Patentanwälte Behrmann Wagner PartG mbB

(57) **Zusammenfassung**

Die Erfindung betrifft eine Vorrichtung (1) zum Erwärmen eines in einem Gefäß (2) aufgenommen Lebensmittels, insbesondere eines Fertiggerichtes, durch Dampfbeaufschlagung, mit einer Dampferzeugungseinheit zum Erzeugen von Dampf sowie mit einer mit der Dampferzeugungseinheit dampfleitend über eine Dampfversorgungsleitung verbundene Dampfzuführeinheit (4), aufweisend mindestens eine eine Dampfabgabeöffnung aufweisende, bevorzugt rotierbar antreibbare, Dampfsonde (6), und mit einer Steuereinrichtung. Erfindungsgemäß ist vorgesehen, eine signalleitend mit der Steuereinrichtung verbundene Erkennungseinrichtung (10) zum Erfassen einer lebensmittelspezifischen, insbesondere fertiggerichtspezifischen, Information anhand eines gefäßseitigen Identifikationselementes (11) zur Unterscheidung von mit unterschiedlichen Lebensmitteln, insbesondere Fertiggerichten, gefüllten Gefäßen (2), wobei die Steuereinrichtung ausgebildet ist, den Betrieb der Vorrichtung (1) als Reaktion auf eine erfasste Information zu steuern.

## Beschreibung

Die Erfindung betrifft eine Vorrichtung gemäß dem Oberbegriff des Anspruchs 1 zum Erwärmen eines in einem Gefäß aufgenommenen Lebensmittels, insbesondere eines Fertiggerichtes, durch Dampfbeaufschlagung, mit einer Dampferzeugungseinheit zum Erzeugen von Dampf sowie mit einer mit der Dampferzeugungseinheit dampfleitend über eine Dampfversorgungsleitung verbundene Dampfzuführeinheit, aufweisend mindestens eine eine Dampfabgabeöffnung aufweisende, bevorzugt rotierbar antreibbare, Dampfsonde, und mit einer Steuereinrichtung (zum Steuern des Betriebs der Vorrichtung).

Ferner betrifft die Erfindung ein Lebensmittelerwärmungssystem, umfassend eine erfindungsgemäße Vorrichtung sowie ein, bevorzugt mit einem zu erwärmenden Lebensmittel, insbesondere einem Fertiggericht, gefüllten, bevorzugt schalen- oder tellerförmigen, Gefäß mit daran angeordneten oder von diesem gebildeten, lebensmittelspezifischen, insbesondere fertiggerichtspezifischen, Identifikationselement, bevorzugt Code.

Darüber hinaus betrifft die Erfindung ein Verfahren gemäß dem Oberbegriff des Anspruchs 10 zum Erwärmen eines in einem Gefäß aufgenommenen Lebensmittels, insbesondere eines Fertiggerichts, unter Verwendung eines erfindungsgemäßen Systems.

Die DE 10 2015 221 005 A1 beschreibt eine Vorrichtung zum Erwärmen von einem in einem Gefäß angeordneten Lebensmittel mit einer fest mit einer Dampfzuführleitung verbundenen Dampfzuführeinheit, die eine Dampfsonde zum Einbringen von Dampf in das zu erwärmende Fertiggericht aufweist, wobei die Dampfzuführeinheit für eine bessere Dampfverteilung und zum Aufrühren bzw. Durchmischen des Fertiggerichtes um eine Rotationsachse mittels eines Antriebs rotierbar antreibbar ist. Die bekannte Vorrichtung hat sich bewährt - es bestehen jedoch Bestrebungen die Bedienung komfortabler zu gestalten.

Ausgehend von dem vorgenannten Stand der Technik liegt der Erfindung daher die Aufgabe zugrunde, eine komfortabler bedienbare Erwärmungsvorrichtung zum Erwärmen von Lebensmitteln, insbesondere Fertiggerichten mit Dampf anzugeben. Darüber hinaus besteht die Aufgabe darin, ein entsprechend verbessertes System mit einer derartigen Vorrichtung sowie ein entsprechend verbessertes Erwärmungsverfahren anzugeben.

Diese Aufgabe wird hinsichtlich der Vorrichtung mit den Merkmalen des Anspruchs 1 gelöst, d.h. bei einer gattungsgemäßen Dampferwärmungsvorrichtung dadurch, dass diese eine signalleitend mit der Steuereinrichtung verbundene Erkennungseinrichtung, insbesondere Sensoreinrichtung, zum Erfassen einer lebensmittelspezifischen, insbesondere fertiggerichtspezifischen, Information anhand eines gefäßseitigen Identifikationselements zur Unterscheidung von mit unterschiedlichen Lebensmitteln, insbesondere Fertiggerichten, gefüllten Gefäßen aufweist, und dass die Steuereinrichtung derart ausgebildet ist, dass sie den Betrieb der Vorrichtung als Reaktion auf eine erfasste Information (lebensmittelspezifisch, insbesondere fertiggerichtspezifisch) steuert. Anders ausgedrückt ist die Vorrichtung derart ausgebildet, dass mit dieser Lebensmittel-, insbesondere Fertiggerichtfüllungen, identifizierbar bzw. unterschiedliche Lebensmittelfüllungen, bevorzugt Fertiggerichtfüllungen unterscheidbar sind, um dann die Vorrichtung zum Erwärmen des Lebensmittels, insbesondere des erkannten Lebensmittels bzw. des erkannten Fertiggerichtes, individuell auf dieses angepasst anzusteuern.

Hinsichtlich des Systems wird die Aufgabe mit den Merkmalen des Anspruchs 8 gelöst, wobei erfindungsgemäß vorgesehen ist, dass das System neben einer erfindungsgemäßen Vorrichtung mindestens ein, bevorzugt mit einem zu erwärmenden Lebensmittel, insbesondere einem Fertiggericht gefüllten Gefäß mit daran angeordnetem oder von diesem gebildeten, eine lebensmittelspezifische, insbesondere fertigungsspezifische, Information tragenden Identifikationselement. Bevorzugt umfasst das System mehrere, mit unterschiedlichen Lebensmitteln, insbesondere unterschiedlichen Fertigungsgerichten gefüllte Gefäße mit einem jeweils daran angeordneten und eine für das jeweilige Lebensmittel, insbesondere fertiggerichtspezifische Information tragenden Identifikationselement.

Hinsichtlich des Verfahrens wird die Aufgabe mit den Merkmalen des Anspruchs 10 gelöst, d.h. bei einem gattungsgemäßen Verfahren dadurch, dass mit der mit der Steuereinrichtung verbundenen Erkennungseinrichtung, insbesondere Sensoreinrichtung, eine lebensmittelspezifische, insbesondere fertiggerichtspezifische, Information anhand eines gefäßseitigen Identifikationselements erfasst wird, und dass der Betrieb der Vorrichtung als Reaktion auf die erfasste Information von der Steuereinrichtung (lebensmittel-, insbesondere fertigungsgerichtspezifisch) gesteuert wird, insbesondere auf Basis eines von mehreren lebensmittelspezifischen, bevorzugt fertigungsgerichtspezifischen, Ablaufprogrammen und/oder Parametern.

Vorteilhafte Weiterbildungen der Erfindung sind in den Unteransprüchen angegeben.

In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, eine Dampferwärmungsvorrichtung zum Aufbereiten, d.h. Erwärmen von in Gefäßen aufgenommenen Lebensmitteln, insbesondere Fertiggerichten mit einer Erkennungseinrichtung, insbesondere einer Sensoreinrichtung, wie einer Kamera, einem Codeleser, od.dgl. Einrichtung zu versehen und diese signalleitend, insbesondere kabelgebunden oder über Funk mit der Steuereinrichtung zu verbinden, wobei die Erkennungseinrichtung derart ausgebildet ist, dass mit dieser anhand eines gefäßseitigen Identifikationselements lebensmittelspezifische, insbesondere fertiggerichtspezifische Informationen erfassbar sind, um hierdurch mit unterschiedlichen Lebensmitteln, insbesondere Fertiggerichten gefüllte Gefäße voneinander zu unterscheiden, wobei die Steuereinrichtung darüber hinaus derart ausgebildet ist, dass diese den Betrieb der Vorrichtung als Reaktion auf eine erfasste Information, d.h. lebensmittelspezifisch, insbesondere fertiggerichtspezifisch ansteuert. Mittels einer erfindungsgemäßen Vorrichtung ist es nicht mehr notwendig, dass die Vorrichtung manuell in Abhängigkeit des zu erwärmenden Lebensmittels parametrisiert wird, sondern dass dies automatisch auf Basis der erfassten Information erfolgt. Hierdurch können mit ein und derselben Vorrichtung unmittelbar nacheinander mit unterschiedlichen Lebensmitteln, insbesondere unterschiedlichen Fertiggerichten gefüllte Gefäße erwärmt werden, wobei die Erwärmung der unterschiedlichen Lebensmittel bzw. Fertiggerichte spezifisch auf das jeweilige Lebensmittel (automatisch) abgestimmt wird, wodurch beispielsweise hitzeempfindliche Lebensmittel zum Erhalten von Vitaminen weniger lange oder mit weniger heißem Dampf beaufschlagt werden. Auch ist es möglich für den bevorzugten Fall der rotierbaren Anordnung und Ausbildung der Dampfsonde den Durchmischungs- bzw. Rührvorgang lebensmittelspezifisch zu steuern, beispielsweise bei langen Nudeln, wie Spaghettis derart, dass die Dampfsonde nicht ausschließlich in einer Richtung rotiert wird sondern bei Erkennen eines entsprechenden Gerichtes hin- und herrotiert wird, um ein Aufwickeln des Lebensmittels, insbesondere Spaghetti in Soße, zu vermeiden.

Die Erfindung führt auch auf ein System mit einer derartigen Vorrichtung sowie mit mindestens einem mit einem Lebensmittel, insbesondere einem Fertiggericht gefüllten Gefäß, ganz besonders bevorzugt mit mehreren Gefäßen, die bevorzugt mit unterschiedlichen Lebensmitteln, insbesondere Fertiggerichten gefüllt sind, wobei die Gefäße jeweils mindestens ein Identifikationselement tragen oder selbst, insbesondere durch eine geometrische Form ausbilden, die eine lebensmittelspezifische, insbesondere fertigungsgerichtspezifische Information codieren bzw. symbolisieren. Durch Auslesen des Identifikationselements bzw. Erfassen der Information ist die Vorrichtung in der Lage, unterschiedliche Fertiggerichte voneinander zu unterscheiden und die Vorrichtung fertiggerichtspezifisch anzusteuern.

Darüber hinaus führt die Erfindung auch auf ein Verfahren zum Erwärmen eines in einem Gefäß aufgenommenen Lebensmittels, insbesondere eines Fertiggerichtes mit Dampf unter Verwendung eines erfindungsgemäßen Systems. Bevorzugt werden im Rahmen des Verfahrens nacheinander mit unterschiedlichen Lebensmitteln, insbesondere Fertiggerichten gefüllte Gefäße der Vorrichtung zugeführt bzw. diese unterschiedlichen Lebensmittel, insbesondere Fertiggerichte werden nacheinander erwärmt, und zwar lebens- bzw. fertiggerichtspezifisch, wozu im Rahmen des Verfahrens anhand eines gefäßseitigen Identifikationselementes eine lebensmittelspezifische, insbesondere fertiggerichtspezifische Information erfasst und der Betrieb der Vorrichtung als Reaktion auf die erfasste Information von der Steuereinrichtung gesteuert wird, insbesondere auf Basis eines von mehreren lebensmittelspezifischen, insbesondere fertiggerichtspezifischen Ablaufprogrammen bzw. Parametern, die beispielsweise in einem Speicher der Vorrichtung abgelegt sein können und anhand der erfassten Information ausgewählt werden. Denkbar ist es auch, dass die Information selbst unmittelbar Behandlungsparameter beinhaltet, die dann von der Steuereinrichtung angewendet werden, derart, dass mindestens eine Funktionseinheit der Vorrichtung auf Basis eines derartigen, ausgelesenen Parameters angesteuert wird.

Im Hinblick auf die Ausgestaltung des Identifikationselements bzw. der Erkennungsmittel zum Auslesen des Identifikationselementes und damit Erfassen der Information gibt es vielfältige Möglichkeiten. So können die Identifikationsmittel beispielsweise als zwei- oder dreidimensionaler Code, insbesondere als Barcode und/oder QR-Code und/oder Farbcode ausgebildet sein, wobei die Erkennungsmittel entsprechend zum Auslesen eines entsprechend ausgebildeten Identifikationselements bzw. Codes ausgebildet sind. Zusätzlich oder alternativ kann das Identifikationselement als Gefäßgeometriemerkmal ausgestaltet sein, also derart, dass in der Form des Gefäßes die Codierung erfolgt bzw. noch anders ausgedrückt das unterschiedliche Lebensmittel, insbesondere Fertiggerichte in geometrisch unterschiedlich gestalteten Gefäßen angeordnet sind, wobei die Gefäßgeometrie und/oder ein Gefäßgeometriemerkmal von den Erkennungsmitteln, beispielsweise durch den Einsatz einer entsprechenden Kamera in Kombination mit Bilderkennungssoftware erkennbar bzw. identifizierbar ist. Zusätzlich oder alternativ können die Erkennungsmittel zum Auslesen einer, insbesondere buchstabenumfassenden Lebensmittelbeschreibung ausgebildet sein und/oder zum Fangen und/oder Auslesen eines Funksignals, von, beispielsweise eines als RFID-Chip ausgebildeten Identifikationselementes. Auf die vorstehenden Ausführungsbeispiele zur Ausbildung des Identifikationselementes bzw. zur entsprechenden Ausgestaltung der Erkennungsmittel ist die Erfindung nicht beschränkt.

Besonders bevorzugt ist es, wenn die Erkennungsmittel, insbesondere ein Sensor der Erkennungsmittel mit Abstand zu der Dampfzuführeinheit angeordnet sind. Dabei ist es ganz besonders bevorzugt, wenn die Erkennungsmittel im Bereich einer Gefäßzuführposition (Beladeposition) angeordnet sind, insbesondere unterhalb oder überhalb oder seitlich von einer Gefäßzuführposition, um ein in diese Position eingebrachtes Gefäß bzw. dessen Identifikationselement zum Erfassen der Information auslesen zu können. Insbesondere dann, wenn die Vorrichtung durch das Vorsehen entsprechender automatisierter Transportmittel, insbesondere einer Linearverstelleinrichtung derart ausgebildet ist, dass ein auf einer Gefäßzuführposition zugeführtes Gefäß hin zu einer Erwärmungsposition (Bedampfungsposition) transportierbar ist ist es bevorzugt, wenn die Erkennungsmittel in einem Bereich entlang des Verstellweges angeordnet sind, um die Information aus dem Identifikationselement während des Verstellens des Gefäßes in Richtung der bevorzugt unterhalb der Dampfzuführeinheit angeordneten bzw. lokalisierten Erwärmungsposition erfassen zu können.

Besonders geschickt ist eine Ausführungsform der Vorrichtung, bei der die Erkennungsmittel in eine bevorzugt horizontale, Arbeitsplatte integriert sind, insbesondere derart, dass diese unterhalb der Arbeitsplatte angeordnet sind, um beispielsweise ein Funksignal von dem Identifikationselement zu empfangen und/oder in eine Arbeitsplattenöffnung eingesetzt sind, um einen Code zu scannen oder das Identifikationselement mittels einer Kamera zu betrachten, etc.

Im Hinblick auf die konkrete Realisierung der lebensmittel-, insbesondere fertiggerichtspezifischen Ansteuerung der Vorrichtung gibt es unterschiedliche Möglichkeiten. Wesentlich ist, dass die Ansteuerung auf das jeweilige Lebensmittel bzw. das jeweilige Fertiggericht bzw. den jeweiligen Lebensmitteltyp, insbesondere Fertiggerichttyp abgestimmt wird, um optimale Erwärmungsergebnisse zu erzielen und gleichzeitig das Produkt maximiert zu schonen, sei es aus temperaturtechnischer Sicht und/oder im Hinblick auf eine maximale mechanische Belastung. So ist es möglich und in Weiterbildung der Erfindung vorgesehen, dass die Steuereinrichtung derart ausgebildet ist, dass sie in Abhängigkeit der erfassten Information (lebensmittel- bzw. fertiggerichtspezifisch), eine Gesamt-Bedampfungsdauer zum Erwärmen des Lebensmittels und/oder eine Bedampfungsintervallanzahl und/oder die Dauer mindestens eines von mehreren Bedampfungsintervallen und/oder eine Dampftemperatur und/oder einen Dampfsättigungsgrad und/oder eine Rotationsdauer der Dampfsonde (falls diese rotierbar antreibbar ist, was bevorzugt ist) und/oder eine Rotationsgeschwindigkeit der Dampfsonde und/oder eine Rotationsrichtungswechselhäufigkeit und/oder eine Rotationsrichtung der Dampfsonde vorgibt und/oder variiert. Zusätzlich oder alternativ ist die Steuereinrichtung in Weiterbildung der Erfindung derart ausgebildet, dass diese in Abhängigkeit des Erfassens der Information eine Verstellbewegung einer Vorrichtungskomponente, insbesondere der Dampfzuführeinheit, insbesondere in vertikaler Richtung und/oder einer Transporteinheit zum automatischen Transportieren des Gefäßes aus einer zuvor bereits erwähnten Gefäßzuführposition in eine, vorzugsweise unterhalb der Dampfzuführeinheit angeordnete Erwärmungsposition und/oder in umgekehrter Richtung initiierend oder stoppend ausgebildet ist. Anders ausgedrückt kann das Erfassen bzw. Identifizieren als Trigger genutzt werden, umeine Verstellbewegung zu starten oder zu stoppen.

Weitere Vorteile, Merkmale und Einzelheiten der Erfindung ergeben sich aus der nachfolgenden Beschreibung bevorzugter Ausführungsbeispiele sowie anhand der Zeichnungen.

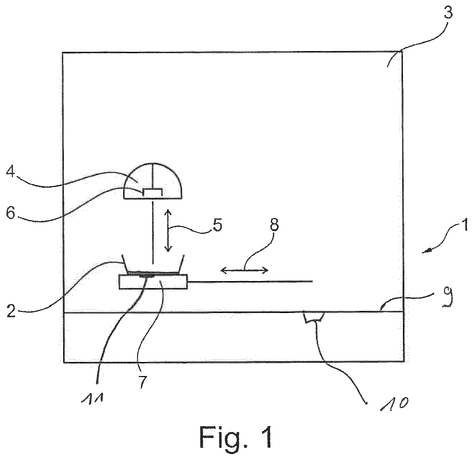

Diese zeigen in der einzigen
- Fig. 1:: eine stark schematisierte Frontansicht einer nach dem Konzept der Erfindung ausgebildeten Vorrichtung zum Erwärmen von in Gefäßen aufgenommenen Lebensmitteln, vorliegend Fertiggerichten.

In Fig. 1 ist schematisch ein System mit einer Vorrichtung 1 zum Erwärmen von einem in einem Gefäß 2 aufgenommenen Fertiggericht mit Dampf gezeigt. Die Vorrichtung 1 umfasst ein Gehäuse 3, in welchem eine Dampferzeugungseinheit, gegebenenfalls mit nachgeschalteter Dampfüberhitzungseinheit angeordnet ist, um, insbesondere überhitzten Dampf zu erzeugen und über eine gehäuseinterne Dampfversorgungsleitung einer Dampfzuführeinheit 4 zuzuführen. Die Dampfzuführeinheit 4 ist in den Pfeilrichtungen 5 mittels eines nicht gezeigten Antriebs translatorisch entlang der Vertikalen verstellbar, und zwar aus der gezeigten oberen Position in eine untere Position, in der die Dampfzuführeinheit 4 mit einer entsprechenden Verschlusshaube auf dem Gefäß 2 aufsitzt und einen Garraum bildet bzw. begrenzt. Die Dampfzuführeinheit 4 umfasst Dampfsonden 6 mit Dampfauslassöffnungen zum Erwärmen des Lebensmittels. Die Dampfsonden 6 sind in dem gezeigten Ausführungsbeispiel um die Vertikalachse mittels eines nicht gezeigten Rotationsantriebs rotierbar, um für eine verbesserte Dampfverteilung Sorge zu tragen sowie das Fertiggericht zu durchmischen.

In dem gezeigten Ausführungsbeispiel sitzt das Gefäß 2 auf einer Gefäßhalterung 7 auf, die translatorisch in der Horizontalen entlang den Pfeilrichtungen 8 hin- und hervertellbar ist, und zwar zwischen der gezeigten Erwärmungs- bzw. Verdampfungsposition unterhalb der Dampfzuführeinheit 4 und einer in der Zeichnungsebene rechts versetzten Beladeposition, in der auf die Gefäßhalterung 7 ein Gefäß 2 aufsetzbar und nach erfolgter Erwärmung wieder entnehmbar ist.

Die Gefäßhalterung 7 ist derart ausgebildet, dass das Gefäß 2 ausschließlich in einer bestimmten Position oder alternativ in zwei um 180° verdrehten Positionen auf die Gefäßhalterung 7 aufsetzbar ist.

Die Vorrichtung 1 umfasst eine horizontale, beispielsweise aus Edelstahl ausgebildete Arbeitsplatte 9, die sich senkrecht aus der Zeichnungsebene heraus erstreckt. In dieser Arbeitsplatte 9 ist eine vorliegend beispielhaft als Barcode-Scanner ausgebildete Erkennungseinrichtung 10 integriert, und zwar entlang der Vertikalen unterhalb der erläuterten Gefäßzuführposition (Beladeposition) seitlich versetzt zur Dampfzuführeinheit 4. Nach Aufstellen eines mit einem Fertiggericht beladenen Gefäßes 2 auf die Gefäßhalterung 7 in der Gefäßbeladeposition wird mithilfe der Erkennungseinrichtung 10 eine Information durch Detektion bzw. Auslesen eines gefäßseitigen Identifikationselementes 11, beispielhaft eines Barcodes erfasst, der aufgrund einer entsprechenden Ausbildung der Gefäßhalterung 7 von unten mittels der Erkennungseinrichtung 10 sichtbar bzw. erfassbar (detektierbar) ist. Die Information wird an eine nicht gezeigte Steuereinrichtung übermittelt, die die Vorrichtung dann, wie im allgemeinen Beschreibungsteil beschrieben als Reaktion auf die erfasste Information, fertiggerichtspezifisch ansteuert.

### Bezugszeichenliste

- 1: Vorrichtung
- 2: Gefäß
- 3: Gehäuse
- 4: Dampfzuführeinheit
- 5: Pfeilrichtungen
- 6: Dampfsonden
- 7: Gefäßhalterung
- 8: Pfeilrichtungen
- 9: Arbeitsplatte
- 10: Erkennungseinrichtung
- 11: Identifikationselement

## Patentansprüche

1. Vorrichtung (1) zum Erwärmen eines in einem Gefäß (2) aufgenommen Lebensmittels, insbesondere eines Fertiggerichtes, durch Dampfbeaufschlagung, mit einer Dampferzeugungseinheit zum Erzeugen von Dampf sowie mit einer mit der Dampferzeugungseinheit dampfleitend über eine Dampfversorgungsleitung verbundene Dampfzuführeinheit (4), aufweisend mindestens eine eine Dampfabgabeöffnung aufweisende, bevorzugt rotierbar antreibbare, Dampfsonde (6), und mit einer Steuereinrichtung,
**gekennzeichnet durch**
eine signalleitend mit der Steuereinrichtung verbundene Erkennungseinrichtung (10) zum Erfassen einer lebensmittelspezifischen, insbesondere fertiggerichtspezifischen, Information anhand eines gefäßseitigen Identifikationselementes (11) zur Unterscheidung von mit unterschiedlichen Lebensmitteln, insbesondere Fertiggerichten, gefüllten Gefäßen (2), wobei die Steuereinrichtung ausgebildet ist, den Betrieb der Vorrichtung (1) als Reaktion auf eine erfasste Information zu steuern.

2. Vorrichtung nach Anspruch 1,
**dadurch gekennzeichnet,**
**dass** die Erkennungsmittel zum Auslesen eines als zwei- oder dreidimensionaler Code, insbesondere Barcode und/oder QR-Code und/oder Farbcode ausgebildeten Identifikationselementes (11) und/oder eines als Gefäßgeometriemerkmals ausgebildeten Identifikationselementes (11) und/oder einer als, insbesondere Buchstaben umfassenden, Lebensmittelbeschreibung ausgebildeten Identifikationselementes (11) und/oder eines Funksignals eines, insbesondere einen RFID-Chip umfassenden, als Funksendemittel ausgebildeten Identifikationselementes (11) ausgebildet sind.

3. Vorrichtung nach einem der vorhergehenden Ansprüche,
**dadurch gekennzeichnet,**
**dass** die Erkennungsmittel mit Abstand zu der Dampfzuführeinheit (4) angeordnet sind, insbesondere derart, dass das Identifikationselement (11) im Bereich einer Gefäßzuführposition und/oder während eines, bevorzugt automatisierten Verstellen, des Gefäßes (2) hin zu einer Erwärmungsposition entlang eines, bevorzugt translatorischen, Verstellweges erfassbar ist.

4. Vorrichtung nach einem der vorhergehenden Ansprüche,
**dadurch gekennzeichnet,**
**dass** die Erkennungsmittel in eine, bevorzugt horizontale, Arbeitsplatte integriert sind.

5. Vorrichtung nach einem der vorhergehenden Ansprüche,
**dadurch gekennzeichnet,**
**dass** die Steuereinrichtung in Abhängigkeit der erfassten Information eine Gesamt-Bedampfungsdauer und/oder eine Bedampfungsintervallanzahl und/oder eine Bedampfungsintervalldauer und/oder eine Dampftemperatur und/oder einen Dampfsättigungsgrad und/oder eine Rotationsdauer der Dampfsonde (7) und/oder eine Rotationsgeschwindigkeit der Dampfsonde (7) und/oder eine Rotationsrichtungswechselhäufigkeit und/oder eine Rotationsrichtung der Dampfsonde (7) vorgebend und/oder variierend ausgebildet ist.

6. Vorrichtung nach einem der vorhergehenden Ansprüche,
**dadurch gekennzeichnet,**
**dass** die Steuereinrichtung in Abhängigkeit des Erfassens der Information eine Verstellbewegung einer Vorrichtungskomponente, insbesondere der Dampfzuführeinheit (4) und/oder einer Transporteinheit zum automatischen Transportieren des Gefäßes (2) aus einer Gefäßzuführposition in eine Erwärmungsposition und/oder aus der Erwärmungsposition in die Gefäßzuführposition initiierend oder stoppend ausgebildet ist.

7. Vorrichtung nach einem der vorhergehenden Ansprüche,
**dadurch gekennzeichnet,**
**dass** die Steuereinrichtung die Vorrichtung (1) auf Basis von in einem Vorrichtungsspeicher abgelegten und/oder auf Basis von durch das Identifikationselement (11) codierten, mittels der Erkennungseinrichtung (10) erfassten Ansteuerparametern ansteuernd ausgebildet ist.

8. Lebensmittelerwärmungssystem, umfassend eine Vorrichtung (1) nach einem der vorhergehenden Ansprüchen sowie mindestens ein, bevorzugt mit einem zu erwärmenden Lebensmittel, insbesondere einem Fertiggericht, gefüllten Gefäß (2) mit daran angeordnetem oder von diesem gebildeten, eine lebensmittelspezifische, insbesondere fertiggerichtspezifische, Information tragenden Identifikationselement (11).

9. System nach Anspruch 8,
**dadurch gekennzeichnet,**
**dass** das Identifikationselement (11) bodenseitig einer Essöffnung gegenüberliegend an dem Gefäß (2) angeordnet ist.

10. Verfahren zum Erwärmen eines in einem Gefäß (2) aufgenommenen Lebensmittels, insbesondere eines Fertiggerichtes, unter Verwendung eines Systems nach einem der Ansprüche 8 oder 9,
**dadurch gekennzeichnet,**
**dass** mit der mit der Steuereinrichtung verbundenen Erkennungseinrichtung (10) eine lebensmittelspezifische, insbesondere fertiggerichtspezifische, Information anhand eines gefäßseitigen Identifikationselementes (11) erfasst wird und dass der Betrieb der Vorrichtung als Reaktion auf die erfasste Information von der Steuereinrichtung gesteuert wird, insbesondere auf Basis eines von mehreren lebensmittelspezifischen, insbesondere fertiggerichtsspezifischen, Ablaufprogrammen und/oder Parametern.
